(19) Europäisches Patentamt
European Patent Office
Office européen des brevets

(11) **EP 4 779 147 A1**

(12) **EUROPEAN PATENT APPLICATION**
published in accordance with Art. 153(4) EPC

(43) Date of publication:
**22.07.2026   Bulletin 2026/30**

(21) Application number: **24865013.7**

(22) Date of filing: **05.06.2024**

(51) International Patent Classification (IPC):
***F03D 1/06*** *(2006.01)*

(52) Cooperative Patent Classification (CPC):
**F03D 1/06;** Y02E 10/72

(86) International application number:
**PCT/JP2024/020475**

(87) International publication number:
**WO 2025/057505 (20.03.2025 Gazette 2025/12)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority:  **12.09.2023   JP 2023147737**

(71) Applicant: **Nabtesco Corporation
Tokyo 102-0093 (JP)**

(72) Inventor: **HASHIMOTO, Hiroaki
Tokyo 102-0093 (JP)**

(74) Representative: **Grünecker Patent- und
Rechtsanwälte
PartG mbB
Leopoldstraße 4
80802 München (DE)**

(54)   **WIND POWER GENERATION DEVICE**

(57)   The wind power generation device includes a rotor shaft rotatable around a first rotation axis, a first generator for converting rotational energy of the rotor shaft into electric power, a rotator connected to the rotor shaft and rotatable around a second rotation axis which is different from the first rotation axis, a vane fixed to the rotator, and a second generator for converting rotational energy of the rotator into electric power.

[FIG. 2]

EP 4 779 147 A1

**Description**

TECHNICAL FIELD

The present invention relates to a wind power generation device.

Priority is claimed on Japanese Patent Application No. 2023-147737, filed on September 12, 2023, the content of which is incorporated herein by reference.

BACKGROUND ART

Patent Document 1 discloses a wind power generation device including a tower mounted so as to be rotatable around an inner cylinder, blades that rotate when receiving wind, and a nacelle installed on the tower and containing a generator that generates electricity by the rotation of the blades. In this wind power generation device, the rotation of the tower is controlled based on the sensing value of an anemometer installed on the nacelle.

Citation List

Patent Document

Patent Document 1: Japanese Patent Application Publication No. 2020-118076

SUMMARY OF INVENTION

Technical Problem

In the above wind power generation device, the rotation of the blades rotating when receiving the direct oncoming wind causes rotation of a rotor shaft, and the rotation speed of the rotor shaft is increased by a speed increaser for power generation by a generator. However, the degree of freedom in power generation control cannot be increased.

The present invention is intended to overcome the above drawback, and one object thereof is to provide a wind power generation device achieving an increased degree of freedom in power generation control.

Solution to Problem

To overcome the above drawback, aspects of the present invention are configured as follows.

(1) A wind power generation device according to an aspect of the present invention comprises: a rotor shaft rotatable around a first rotation axis; a first generator for converting rotational energy of the rotor shaft into electric power; a rotator connected to the rotor shaft and rotatable around a second rotation axis that is different from the first rotation axis; a vane fixed to the rotator; and a second generator for converting rotational energy of the rotator into electric power.

According to this configuration, power can be generated not only by the rotation of the rotor shaft (rotation around the first rotation axis) but also by the rotation of the vanes themselves (rotation around the second rotation axis), thus increasing the degree of freedom of power generation control.

(2) The wind power generation device of (1) may further comprise: a tower; and a nacelle supported on the tower so as to be able to turn, wherein the first generator may be contained in the nacelle.

(3) The wind power generation device of (1) or (2) may further comprise: a first power generation control unit for controlling the first generator; and a second power generation control unit for controlling the second generator.

(4) The wind power generation device of (3) may further comprise: a rotation speed obtaining unit for sensing an actual rotation speed of the rotor shaft or the first generator; and a wind condition obtaining unit for obtaining wind condition information including current wind speed, wherein the first power generation control unit may control the first generator based on a result of comparison between the actual rotation speed and a rated rotation speed, and wherein the second power generation control unit may control the second generator based on the wind condition information.

(5) In the wind power generation device of (4), the second power generation control unit may control the second generator to reduce a rotation speed of the rotator when the current wind speed is equal to or above a threshold value.

(6) The wind power generation device of any one of (3) to (5) may further comprise: a position sensing unit for sensing a distal end position of the vane, wherein the second power generation control unit may control the second generator to reduce a rotation speed of the rotator when the sensed distal end position of the vane is equal to or above a height threshold.

(7) The wind power generation device of any one of (3) to (6) may further comprise: a wind condition obtaining unit for obtaining wind condition information including current wind speed, wherein the second power generation control unit may control the second generator to reduce a rotation speed of the rotator when an actual rotation speed of the first generator is higher than the current wind speed.

(8) In the wind power generation device of any one of (3) to (7), the second power generation control unit may control the second generator to vary a rotation speed of the rotator located to left or right of a revolution position.

Advantageous Effects of Invention

According to the present invention, the degree of freedom in power generation control can be increased.

BRIEF DESCRIPTION OF DRAWINGS

[Fig. 1] A perspective view of a wind power generation device according to a first embodiment.
[Fig. 2] A diagram showing an example of functional configuration of the wind power generation device according to the first embodiment.
[Fig. 3] A diagram illustrating rotation directions of parts of the wind power generation device according to the first embodiment.
[Fig. 4] A perspective view of a blade according to the first embodiment as viewed from one side.
[Fig. 5] A perspective view of the blade according to the first embodiment as viewed from the other side.
[Fig. 6] A perspective view of an assembly according to the first embodiment.
[Fig. 7] A diagram showing the flow velocity distribution in the case of eight vanes.
[Fig. 8] A diagram illustrating propulsion in the case of eight vanes.
[Fig. 9] A diagram following Fig. 8 to illustrate propulsion in the case of eight vanes.
[Fig. 10] A diagram showing an example of braking force control based on the rotation mode of the wind power generation device according to the first embodiment.
[Fig. 11] An explanatory diagram of relative wind velocity and other factors during headwinds.
[Fig. 12] A diagram showing an example of wind direction component forces and orthogonal components in the case of eight vanes.
[Fig. 13] A diagram showing an example of a relationship between relative wind direction and optimum lift coefficient.
[Fig. 14] A diagram showing an example of a relationship among rotation frequency, propulsive force, and power generation energy.
[Fig. 15] A diagram showing an example of a relationship between lift constant and lift-to-drag ratio.
[Fig. 16] A flowchart showing a first example of control of a second generator.
[Fig. 17] A flowchart showing a second example of control of the second generator.
[Fig. 18] A flowchart showing a third example of control of the second generator.
[Fig. 19] A perspective view showing a first position of a plurality of vanes in a wind propulsion device according to a second embodiment, viewed from one side.
[Fig. 20] A perspective view showing a second position of the plurality of vanes in the wind propulsion device according to the second embodiment, viewed from one side.
[Fig. 21] An explanatory diagram of the effect of the wind propulsion device according to the second embodiment.
[Fig. 22] A diagram showing a modification example of a twisted shape of a plurality of vanes.
[Fig. 23] A side view of a blade according to a third embodiment, including a longitudinal section thereof.
[Fig. 24] A diagram showing the blade according to the third embodiment, including a cross section thereof.
[Fig. 25] A diagram showing the blade according to the third embodiment as viewed from one side of a second rotation axis.
[Fig. 26] A diagram showing an example of the effect of the blade according to the third embodiment.
[Fig. 27] A diagram showing an example of operation of the blade according to the third embodiment.
[Fig. 28] A diagram showing another example of operation of the blade according to the third embodiment.
[Fig. 29] A diagram showing a modification example of the wind power generation device.

DESCRIPTION OF EMBODIMENTS

A wind power generation device according to the embodiments of the present invention will now be described with reference to the attached drawings. In the following description, terms such as "parallel," "orthogonal," "center" and "coaxial" describe relative or absolute positions. These terms not only strictly mean such positions but also allow some tolerances and relative differences in angle and distance as long as the same effects can be still produced. In the drawings used for the following description, members are shown to different scales into recognizable sizes.

<Wind Power Generation Device>

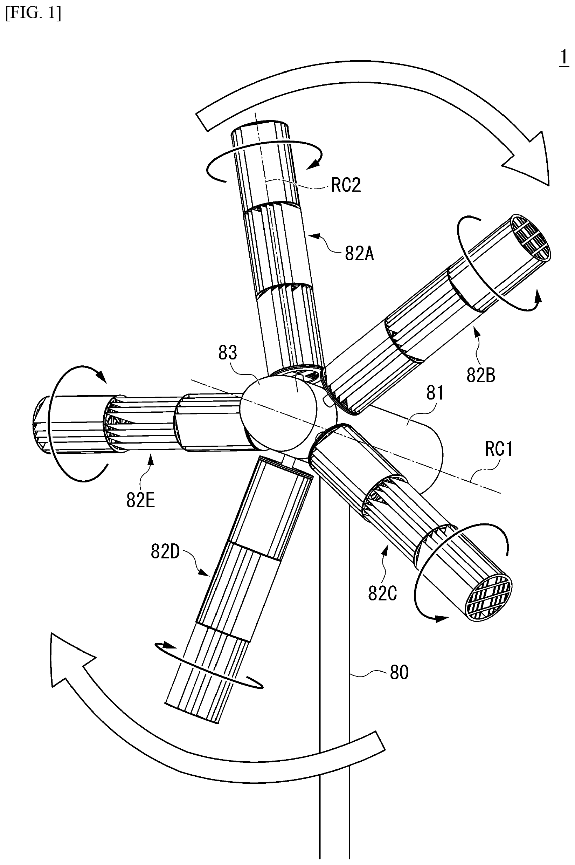

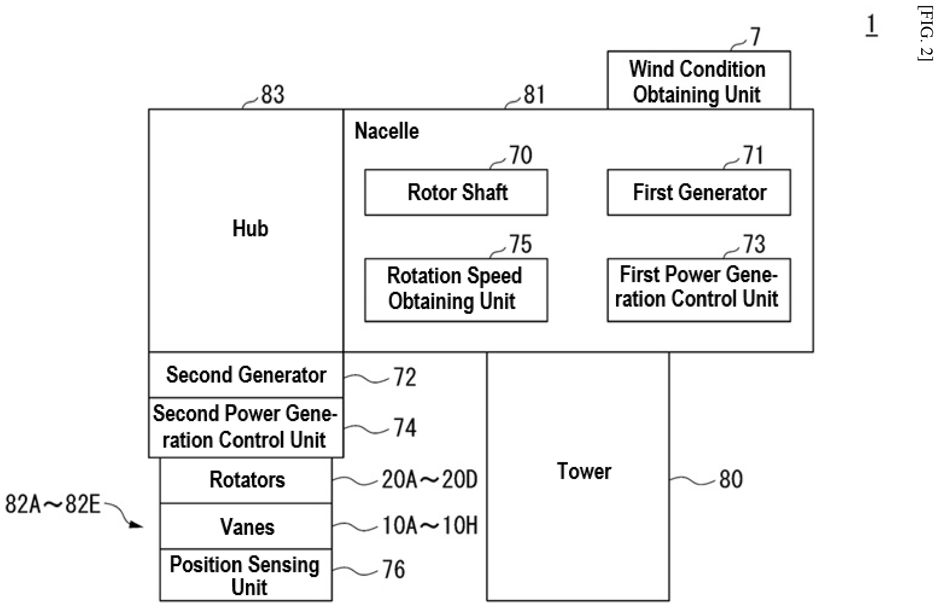

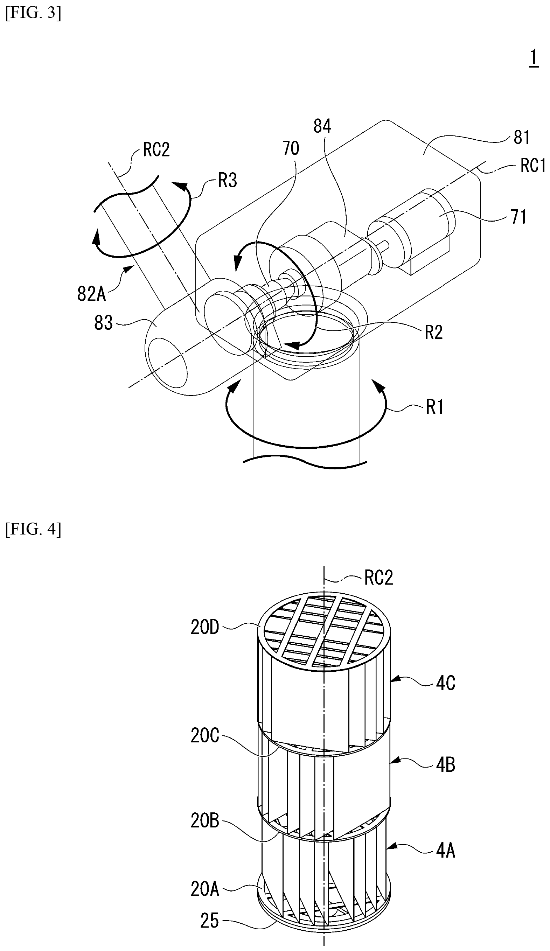

Fig. 1 is a perspective view of a wind power generation device 1 according to a first embodiment. Fig. 2 is a diagram showing an example of functional configuration of the wind power generation device 1 according to the first embodiment. Fig. 3 is a diagram illustrating rotation directions of parts of the wind power generation device 1 according to the first embodiment.

Referring to Figs. 1 to 3 together, the wind power generation device 1 includes a rotor shaft 70 rotatable around a first rotation axis RC1, a first generator 71 for converting rotational energy of the rotor shaft 70 into electric power, rotators 20A to 20D connected to the rotor shaft 70 and configured to rotate around a second rotation axis RC2 which is different from the first rotation axis RC1, vanes 10A to 10H fixed to the rotators 20A to 20D, and a second generator 72 for converting rotational energy of the rotators 20A to 20D into electric power. The wind power generation device 1 functions as a horizontal axis wind turbine with the first rotation axis RC1 being a horizontal axis extending in the horizontal direction. The second rotation axis RC2 corresponds to the axes along the longitudinal directions of blades 82A to 82E. The illustrated example shows the second rotation axis RC2 of the blade 82A.

The wind power generation device 1 further includes a tower 80 and a nacelle 81 supported on the tower 80 so as to be able to turn. The first generator 71 is contained in the nacelle 81.

The nacelle 81 is mounted on the top end of the tower 80. The nacelle 81 can rotate (yaw) around the tower 80. For example, a yaw drive device (not shown) capable of yawing the nacelle 81 is provided at the top end of the tower 80.

The rotators 20A to 20D and the vanes 10A to 10H constitute the blades 82A to 82E. The blades 82A to 82E are connected to the nacelle 81 via a hub 83. The blades 82A to 82E are arranged radially around the hub 83. The bases of the blades 82A to 82E are mounted to the hub 83.

The blades 82A to 82E include at least one blade. In the example shown, five (one example of a plurality) blades 82A to 82E are provided at equal intervals in the circumferential direction around the first rotation axis RC1. The second generator 72 is provided for each of the plurality of blades 82A to 82E. Note that the configuration of the blades 82A to 82E (such as the number and arrangement) is not limited to the above and can be changed depending on design specifications.

For example, the nacelle 81 contains a speed increaser 84. The rotation speed of the rotor shaft 70 connected to the hub 83 is increased by the speed increaser 84. The rotational force with the increased speed is transmitted to the first generator 71 for power generation.

In the wind power generation device 1, three rotations occur. The first rotation is yaw rotation of the nacelle 81 rotating around the tower 80 (the rotation in the direction of arrow R1 shown in Fig. 3). The second rotation is horizontal axis rotation of the hub 83, to which the blades 82A to 82E are mounted, rotating around the first rotation axis RC1 (the rotation in the direction of arrow R2 shown in Fig. 3). The third rotation is pitch rotation of the blades 82A to 82E rotating around the second rotation axis RC2 (the rotation in the direction of arrow R3 shown in Fig. 3). The blades 82A to 82E revolve around the first rotation axis RC1 by the horizontal axis rotation of the hub 83.

The wind power generation device 1 further includes a first power generation control unit 73 for controlling the first generator 71 and a second power generation control unit 74 for controlling the second generators 72.

The first power generation control unit 73 and the second power generation control unit 74 includes, for example, a memory and a processor such as a CPU (Central Processing Unit) that are connected to each other via a bus. The processor reads a power generation control program stored in a storage unit (not shown) and stores the read power generation control program in the memory. The processor executes the power generation control program stored in the memory.

The wind power generation device 1 further includes a rotation speed obtaining unit 75 for sensing the actual rotation speed of the rotor shaft 70 or the first generator 71, and a wind condition obtaining unit 7 for obtaining wind condition information including the current wind speed. The first power generation control unit 73 controls the first generator 71 based on the results of the comparison between the actual rotation speed and the rated rotation speed. The second power generation control unit 74 controls the second generators 72 based on the wind condition information.

For example, the rotation speed obtaining unit 75 includes a sensor for sensing the rotation speed (rotation frequency) of the rotor shaft 70 or the first generator 71. The rotation speed obtaining unit 75 may include a proximity sensor. The proximity sensor may be configured to output an on-signal when metal is situated within a certain distance and an off-signal when metal is not situated within the certain distance. In this case, the proximity sensor outputs an on-signal when, for example, a convex portion provided on the surface of the rotor shaft 70 is situated within a detection range and an off-signal when a concave portion provided in the surface of the rotor shaft 70 is situated within the detection range. The rotation speed obtaining unit 75 may obtain the rotation speed of the rotor shaft 70 based on such changes in the output of the proximity sensor and the information obtained in advance indicating the intervals between the concave portion and convex portion of the rotor shaft 70.

The rotation speed obtaining unit 75 may include other types of devices, in place of the proximity sensor. For example, the rotation speed obtaining unit 75 may include an encoder.

The wind condition obtaining unit 7 obtains the wind condition information including the wind direction in the installation area of the wind power generation device 1. The wind condition obtaining unit 7 obtains the wind condition information including wind direction and wind speed. For example, the wind condition obtaining unit 7 is installed on the nacelle 81. The wind condition obtaining unit 7 includes an anemometer.

The wind power generation device 1 further includes a position sensing unit 76 for sensing the distal end positions of the blades 82A to 82E (an example of distal end positions of the vanes).

For example, the position sensing unit 76 may sense the rotation angle of the blades 82A to 82E rotating around the first rotation axis RC1 when receiving wind. For example, if rotation angles of 0, 90, 180, and 270 degrees are sensed, the position sensing unit 76 senses position information of top, right, bottom, and left, respectively, as the distal end positions of the blades 82A to 82E.

<Blades>

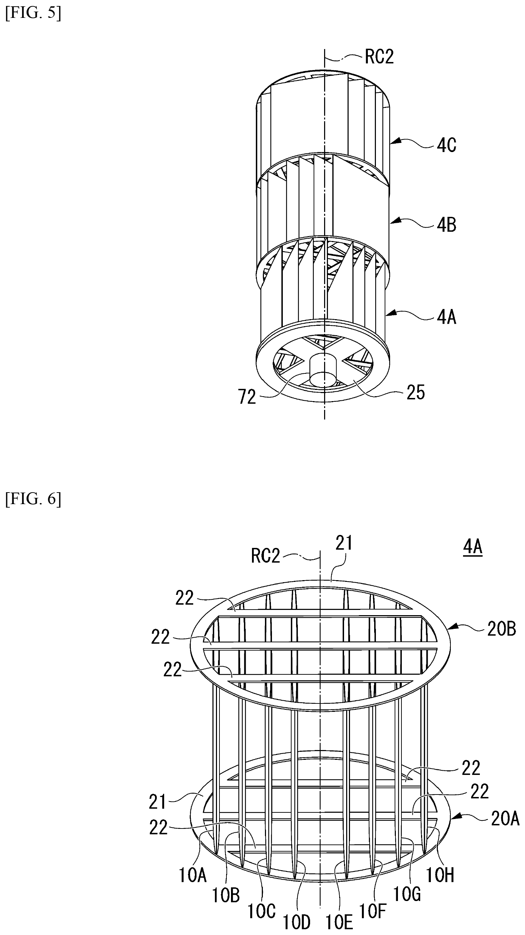

Fig. 4 is a perspective view of the blades 82A to 82E according to the first embodiment as viewed from one side (in the example shown, one blade is viewed from the distal end side). Fig. 5 is a perspective view of the blades 82A to 82E according to the first embodiment as viewed from the other side (in the example shown, one blade is viewed from the base side). Fig. 6 is a perspective view of an assembly 4A according to the first embodiment.

Referring to Figs. 4 to 6 together, the blades 82A to 82E are composed of a plurality of assemblies 4A to 4C stacked together. The plurality of assemblies 4A to 4C are arranged along the second rotation axis RC2. Supposing that N is the number of assemblies 4A to 4C and M is a natural number, the plurality of assemblies 4A to 4C are positioned differently from each other by $180 \times M/N$ degrees.

In the example shown, three assemblies 4A to 4C are positioned differently from each other by 60 degrees. In the example shown, among the three assemblies 4A to 4C, the second assembly 4B is positioned differently from the first assembly 4A by 60 degrees (60 degrees clockwise as viewed from one side of the second rotation axis RC2), and the third assembly 4C is positioned differently from the first assembly 4A by 120 degrees (120 degrees clockwise as viewed from one side of the second rotation axis RC2). Note that the configuration (number and arrangement, etc.) of the plurality of assemblies 4A to 4C is not limited to the above and can be modified in accordance with the design specifications.

In this embodiment, the first, second, and third assemblies 4A, 4B, and 4C constituting the three assemblies 4A to 4C include respective vanes 10A to 10H connected together via the rotating plates 20A to 20D. In this embodiment, the rotating plates 20A to 20D include a base plate 20A, a first intermediate plate 20B, a second intermediate plate 20C, and a distal end plate 20D.

The plurality of vanes 10A to 10H included in the first assembly 4A are fixed to the base plate 20A at their bases and fixed to the first intermediate plate 20B at their distal ends. The plurality of vanes 10A to 10H included in the second assembly 4B are fixed to the first intermediate plate 20B at their bases and fixed to the second intermediate plate 20C at their distal ends. The plurality of vanes 10A to 10H included in the third assembly 4C are fixed to the second intermediate plate 20C at their bases and fixed to the distal end plate 20D at their distal ends.

According to this configuration, the assemblies 4A to 4C have high strength because the entire cylinder, not struts, receives the load. The absence of a central pillar also reduces wind resistance. Furthermore, when stacking the plurality of assemblies 4A to 4C, the stacking can be accomplished easily by simply fixing one assembly (e.g., first assembly 4A) to another (e.g., second assembly 4B) using bolts or other fastening members. In addition, since there are no motors or other moving parts in the connecting portions of the plurality of assemblies 4A to 4C, they can be easily assembled together on-site.

The following describes the configuration of the assemblies 4A to 4C, focusing on the first assembly 4A. The other assemblies 4B and 4C, which have the same configuration as the first assembly 4A, will not be described in detail.

Referring also to Fig. 6, the first assembly 4A is constituted by rotators 20A and 20B that can rotate around the second rotation axis RC2 (dashed-dotted line shown in the figure), and a plurality of plate-shaped vanes 10A to 10H that are each fixed to the rotators 20A and 20B. The plurality of vanes 10A to 10H are arranged so that the imaginary straight lines connecting their respective opposite ends are parallel. The plurality of vanes 10A to 10H are disposed so that their respective opposite ends are located on an imaginary circle around the rotation axis. The longest (innermost) one of the plurality of vanes 10A to 10H is disposed so that the length of the imaginary straight line (the length from one end of the vane to the other, or what is called a chord length) is at least 1/2 the diameter of the imaginary circle around the rotation axis. The outermost one of the plurality of vanes 10A to 10H may have a chord length less than 1/2 the diameter of the imaginary circle around the rotation axis. Note that the chord lengths of the plurality of vanes are not limited to the above and may be modified in accordance with the design specifications.

In the example shown, the imaginary circle around the rotation axis is a perfect circle as viewed from the direction along the second rotation axis RC2. Note that the shape of the imaginary circle as viewed from the direction along the second rotation axis RC2 is not limited to the above, but may also be elliptical, oblong, quadrangular, or a closed ring formed by connecting curves.

The rotators 20A, 20B are plate-shaped rotating plates 20A, 20B. The plurality of vanes 10A to 10H are each fixed to respective one face of the rotating plates 20A, 20B. In the illustrated example, the rotating plates 20A, 20B include a base plate 20A, to which the bases of the plurality of vanes 10A to 10H are fixed, and a first intermediate plate 20B (an example of distal end plate), to which the distal ends of the plurality of vanes 10A to 10H are fixed. For example, the base plate 20A is rotatably connected to a support plate 25 on the hub 83 via a bearing (not shown).

The rotating plates 20A, 20B each have a frame 21 having an annular shape and a plurality of beams 22 connected at both ends thereof to the inner circumference of the frame 21 and parallel to each other. In the illustrated example, three beams 22 are connected at both ends thereof to the inner circumference of the frame 21 and are equally spaced. Note that the configuration (number and arrangement, etc.) of the beams 22 is not limited to the above and can be modified in accordance with the design specifications. For example, the configuration (shape, etc.) of the rotators 20A, 20B may be in the form of a solid disk (an example of a rotating plate) or a hollow disk. The configuration of the rotators 20A, 20B is not limited to the above and can be modified in accordance with the design specifications.

In this embodiment, the blades 82A to 82E are each constituted by three assemblies stacked together. However, the number of assemblies constituting the blades 82A to 82E is not limited to the above and can be modified in accordance with the design specifications. For example, the blades 82A to 82E may be each constituted by one assembly. For example, if assemblies A and B are provided, the assemblies A and B may have a common rotator 20A, 20B. For example, the installation configuration of the rotators 20A, 20B with respect to a plurality of assemblies may be modified in accordance with the design specifications. Furthermore, the assemblies A and B may have the same shape, and the rotators 20A, 20B may be bolted or welded.

The plurality of vanes 10A to 10H are vanes 10A to 10H extending in the direction along the second rotation axis RC2. As viewed from the direction along the second rotation axis RC2, the plurality of vanes 10A to 10H are disposed so as to be line symmetrical with respect to a center line that passes through the rotation center of the second rotation axis RC2 and is parallel to the imaginary straight lines. As viewed from the direction along the second rotation axis RC2, the plurality of vanes 10A to 10H are disposed so as to be line symmetrical with respect to a center line that passes through the rotation center of the second rotation axis RC2 and is orthogonal to the imaginary straight lines.

In the illustrated example, each of the eight vanes 10A to 10H extends in the direction along the second rotation axis RC2 to intersect the respective three beams 22 of the rotating plates 20A, 20B. In the illustrated example, of the eight vanes 10A to 10H, the four vanes 10A to 10D on one side of the rotation center are equally spaced, and the four vanes 10E to 10H on the other side are equally spaced. Note that the configuration of the vanes 10A to 10H (number and arrangement, etc.) is not limited to the above and may be changed depending on the design specifications.

<Propulsion with Eight Vanes>

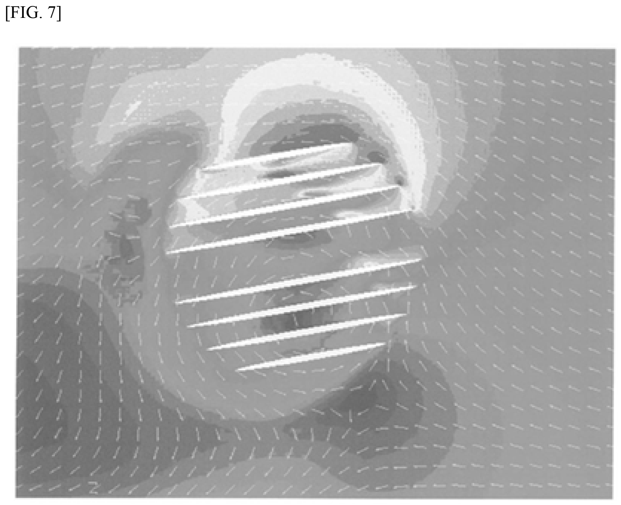

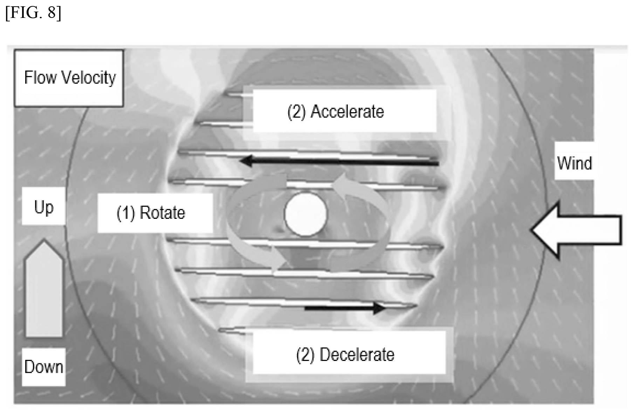

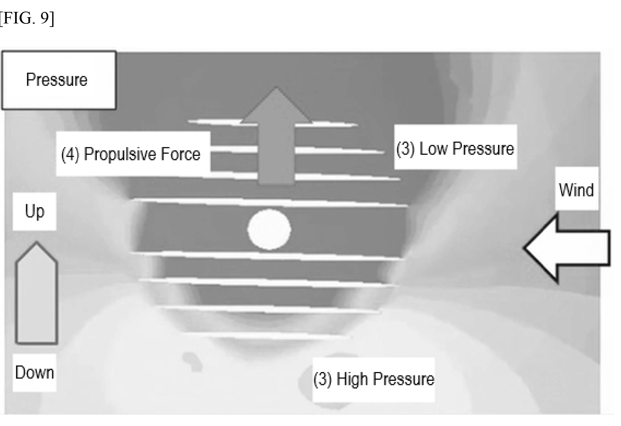

Fig. 7 shows the flow velocity distribution in the case of eight vanes. Fig. 8 illustrates propulsion in the case of eight vanes. Fig. 9 follows Fig. 8 to illustrate propulsion in the case of eight vanes. In the illustrated example, a pillar is shown at the rotation center of the second rotation axis RC2, but this pillar may be absent. The illustrated example shows the case where the blades 82A to 82E are horizontally positioned (e.g., the distal end positions of the blades 82A to 82E are to the right or left). In the illustrated example, the propulsive force corresponds to the force in the direction in which the blades 82A to 82E revolve.

Referring to Figs. 7 to 9 together, the eight vanes rotate regardless of wind direction. In the eight vanes, the portions on the upper side of the rotation center are aligned with the rotation direction, and thus the wind on the upper side is accelerated and the wind on the lower side is decelerated. Then, based on Bernoulli's theorem, the pressure on the upper side decreases, and the pressure on the lower side increases. This pressure difference generates a propulsive force orthogonal to the wind direction. This propulsive force is called the Magnus force. When the wind direction is opposite, the rotation direction is reversed. Strictly speaking, the Magnus force is a force generated by the rotation of a cylinder or a sphere, but because the mechanism of force generation is similar, the propulsive force generated by parallel vanes is also referred to as the Magnus force. The Magnus force is also called lift because it acts in a direction orthogonal to the wind.

In this embodiment, the eight vanes are disposed so that their respective opposite ends are located on an imaginary circle around the second rotation axis RC2, and the imaginary straight lines connecting their respective opposite ends are parallel. This allows for a larger propulsive force to be generated than in the case of seven or fewer vanes. Depending on the Reynolds number, that is, factors such as size and wind speed, the propulsive force tends to increase as the number of vanes is larger. For example, the plurality of vanes may include 18 vanes.

<Braking Force Control Based on Rotation Mode of Wind Power Generation Device>

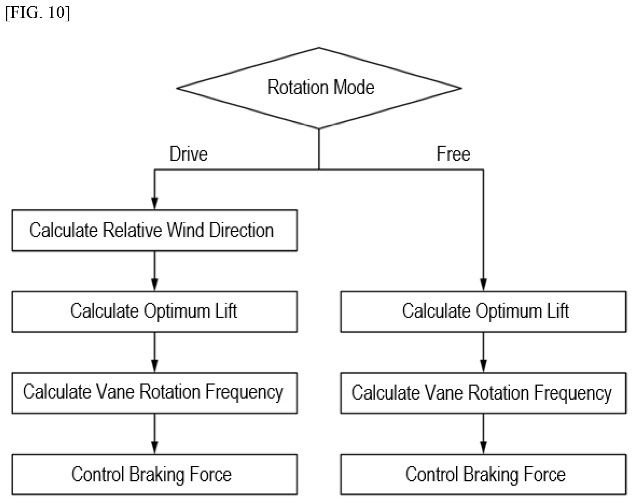

Fig. 10 is a diagram showing an example of braking force control based on the rotation mode of the wind power generation device 1 according to the first embodiment.

Referring also to Fig. 10, the braking force control based on the rotation mode of the wind power generation device 1 can be performed separately for "drive" and "free." The term "free" refers to propulsion by wind power alone, without the use of other motive power such as by motors. There is also an intermediate rotation mode between "slow drive" and "free," which uses a smaller proportion of motive power such as by motors. In this case, intermediate values between the two rotation modes are optimum. For example, depending on the wind speed and wind direction, a generator (motor) can be braked, driven, or set free, thus being switched to different modes for control.

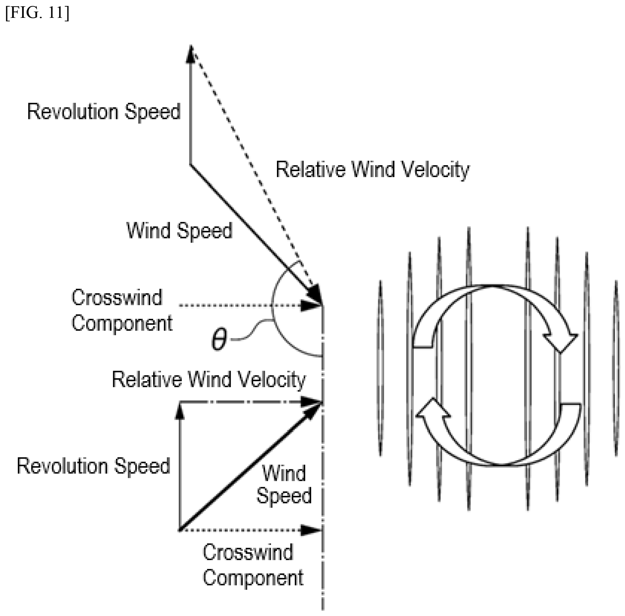

Fig. 11 is an explanatory diagram of relative wind velocity and other factors during headwinds. In Fig. 11, the symbol $\theta$ refers to the wind direction taking into account the relative wind velocity associated with the revolution speed (the speed of revolution of the blades 82A to 82E).

Referring also to Fig. 11, when the vanes are rotated by the force of the wind, the revolution of the blades 82A to 82E makes the headwind relatively stronger, thereby causing the vanes to rotate at a higher speed. Therefore, the Magnus effect increases the propulsive force in the revolution direction.

In the wind power generation device 1 according to this embodiment, the vanes are rotated by the force of the wind, and thus the revolution of the blades 82A to 82E makes the headwind relatively stronger, thereby causing the vanes to rotate at a higher speed. As a result, the Magnus effect produces a propulsive force in the revolution direction even during headwinds.

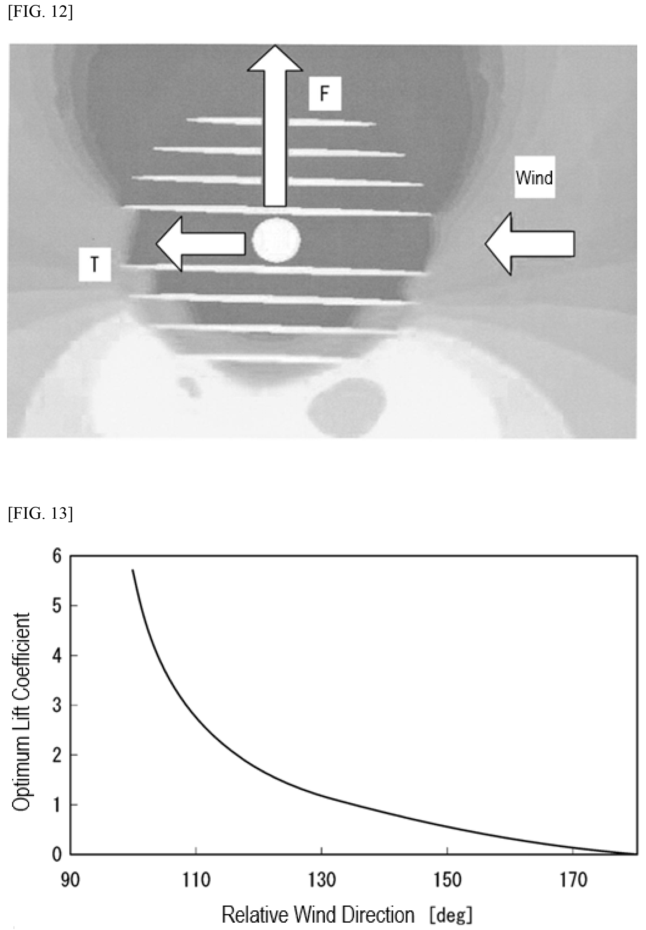

Fig. 12 is a diagram showing an example of wind direction component forces and orthogonal components in the case of eight vanes.

Referring also to Fig. 12, the wind direction component forces and orthogonal components are calculated, for example, by fluid analysis (two-dimensional analysis). For example, for the eight vanes shown in Fig. 12, drag T = 39 kN and lift F = 354 kN, yielding a lift-to-drag ratio F/T = 9.

For example, in the case of a directly transverse wind (e.g., a wind speed of 10 m/s), a speed multiplied by the lift-to-drag ratio will results in zero propulsive force. For zero resistance and the free mode, this speed (e.g., 90 m/s) is reached. The maximum propulsive force by the wind power is obtained at 2/3 of the above speed (e.g., 60 m/s).

The above is for a two-dimensional analysis, and a three-dimensional analysis is affected by the aspect ratio. Induced drag is generally associated with the lift, and there is a significant effect when the lift is large and the aspect ratio is small.

The relational expressions for the three-dimensional analysis are shown in Formulae (1) to (5) below. In the formulae, $C_D$ is the drag constant, $C_{D0}$ is the drag constant in the two-dimensional analysis, $C_L$ is the lift constant, $\pi$ is the circumference ratio, e is Oswald's constant, AR is the aspect ratio, $\theta$ is the wind direction (the wind direction taking into account the relative wind velocity associated with the revolution speed), V is the wind speed, $\rho$ is the density, and S is the vane area.

[Mathematical Expression 1]

$$C_D = C_{D0} + \frac{C_L^2}{\pi e AR} \qquad \cdots \quad \text{Formula (1)}$$

From Formula (1) above, for example, when the vanes are applied to high-speed blades 82A to 82E, the vanes should have an elongated shape.

[Mathematical Expression 2]

$$L\sin\theta + T\cos\theta = \{C_L\sin\theta + C_D\cos\theta\}(1/2\rho V^2 S)$$
$$= \{C_L\sin\theta + (C_{D0} + C_L^2/(\pi e AR))\cos\theta\}(1/2\rho V^2 S) \qquad \cdots \quad \text{Formula (2)}$$

For the propulsive force in the revolution direction, the value of Formula (2) above should be maximized. When there is a tailwind, the lift constant $C_L$ should be maximized, but most of the time there is a headwind ($\theta$ is obtuse) because of the revolution speed, in which case there is an optimum $C_L$ value. Differentiating Formula (2) above to obtain an extreme value yields Formula (3) below.

[Mathematical Expression 3]

$$C_L = (1/2)\tan\theta \ \pi e AR \qquad \cdots \quad \text{Formula (3)}$$

For example, to achieve maximum speed by switching to the free mode, the lift-to-drag ratio should be maximized. Differentiating Formula (4) below, the lift-to-drag ratio is maximized when Formula (5) below is true, resulting in the maximum speed.

[Mathematical Expression 4]

$$C_L/C_D = C_L/(C_{D0} + C_L^2/(\pi e AR)) \qquad \cdots \text{Formula (4)}$$

[Mathematical Expression 5]

$$C_L = (C_{D0}\pi e AR)^{0.5} \qquad \cdots \text{Formula (5)}$$

<Drive>

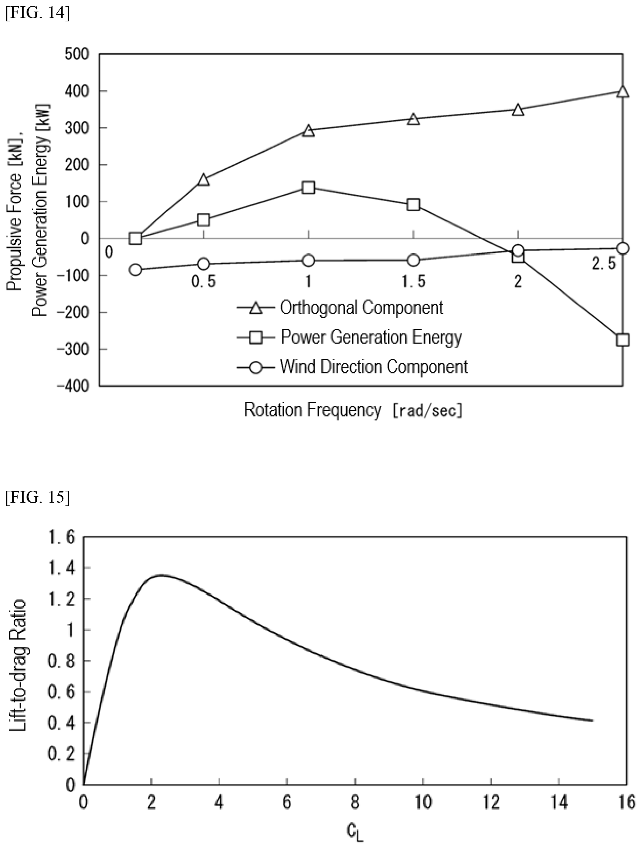

Fig. 13 is a diagram showing an example of a relationship between relative wind direction and optimum lift coefficient. Fig. 14 is a diagram showing an example of a relationship among rotation frequency, propulsive force, and power generation energy.

Referring to Figs. 10 to 14 together, for driving for example, the relative wind direction is first calculated. For example, the relative wind direction is calculated based on the revolution speed of the blades 82A to 82E and the wind condition information obtained. The relative wind direction may be obtained by the wind condition obtaining unit 7.

Next, the optimum lift coefficient is calculated based on the calculated relative wind direction. For example, the optimum lift coefficient is calculated based on Formula (3) or the graph shown in Fig. 13 (e.g., data obtained in advance).

Next, the vane rotation frequency is calculated based on the calculated optimum lift coefficient. For example, the vane rotation frequency is calculated based on the graph shown in Fig. 14 (e.g., data obtained in advance).

Next, the braking force is controlled based on the calculated vane rotation frequency. For example, the braking force may be controlled so that the predetermined propulsive force and power generation energy can be obtained while the vane rotation frequency is maintained at a constant value. For example, in a headwind, a brake may be applied (electric power is generated) to reduce the rotation frequency and adjust the lift coefficient.

<Free>

Fig. 15 is a diagram showing an example of a relationship between lift constant and lift-to-drag ratio. In Fig. 15, the optimum lift coefficient value is obtained when the aspect ratio AR = 2.5.

Referring to Figs. 10 to 15 together, in the free mode for example, the optimum lift coefficient is first calculated. For example, the optimum lift coefficient is calculated based on Formula (5) or the graph shown in Fig. 15 (e.g., data obtained in advance).

Next, the vane rotation frequency is calculated based on the calculated optimum lift coefficient to control the braking force. The calculation of the vane rotation frequency and the control of the braking force in the free mode may be performed in the same manner as for the drive mode described above.

<Example of Control of Second Generator>

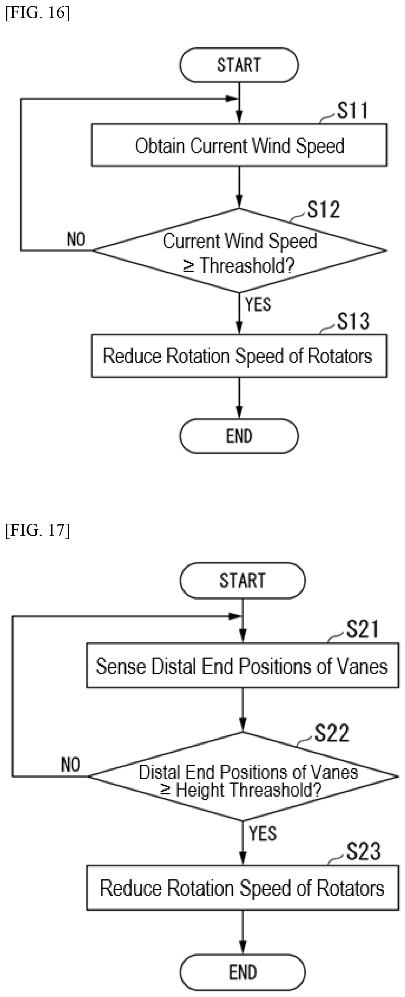

Fig. 16 is a flowchart showing a first example of control of the second generators 72.

Referring also to Fig. 16, the second power generation control unit 74 controls the second generators 72 to reduce the rotation speed of the rotators 20A to 20D when the current wind speed is equal to or above a threshold value.

Specifically, the wind condition obtaining unit 7 first obtains the wind condition information including the current wind speed (step S11 in Fig. 16). The data regarding the obtained wind condition information, including the current wind speed, is transmitted to the second power generation control unit 74. After step S11, the process proceeds to step S12.

In step S12, the second power generation control unit 74 determines whether the current wind speed is equal to or above the threshold value. If NO in step S12 (the current wind speed is below the threshold value), the process returns to step S11. If YES in step S12 (the current wind speed is equal to or above the threshold value), the process proceeds to step S13.

In step S13, the second power generation control unit 74 controls the second generators 72 to reduce the rotation speed of the rotators 20A to 20D.

The flow of the first example of control of the second generators 72 is thus ended.

Fig. 17 is a flowchart showing a second example of control of the second generators 72.

Referring also to Fig. 17, the second power generation control unit 74 controls the second generators 72 to reduce the rotation speed of the rotators 20A to 20D when the sensed distal end positions of the blades 82A to 82E (an example of distal end positions of the vanes) are equal to or above a height threshold.

Specifically, the position sensing unit 76 first senses the distal end positions of the blades 82A to 82E. The data regarding the sensed distal end positions of the blades 82A to 82E is transmitted to the second power generation control unit 74. After step S21, the process proceeds to step S22.

In step S22, the second power generation control unit 74 determines whether the sensed distal end positions of the blades 82A to 82E are equal to or above the height threshold value. If NO in step S22 (the distal end positions of the blades 82A to 82E are below the height threshold value), the process returns to step S21. If YES in step S22 (the distal end positions of the blades 82A to 82E are equal to or above the height threshold value), the process proceeds to step S23.

In step S23, the second power generation control unit 74 controls the second generators 72 to reduce the rotation speed of the rotators 20A to 20D.

The flow of the second example of control of the second generators 72 is thus ended.

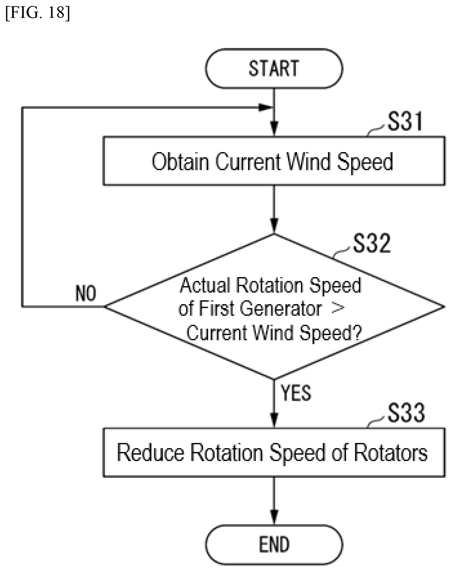

Fig. 18 is a flowchart showing a third example of control of the second generators 72.

Referring also to Fig. 18, the second power generation control unit 74 controls the second generators 72 to reduce the rotation speed of the rotators 20A to 20D when the actual rotation speed of the first generator 71 is higher than the current wind speed.

Specifically, the wind condition obtaining unit 7 first obtains the wind condition information including the current wind speed (step S31 in Fig. 18). The data regarding the obtained wind condition information, including the current wind speed, is transmitted to the second power generation control unit 74. After step S31, the process proceeds to step S32.

In step S32, the second power generation control unit 74 determines whether the actual rotation speed of the first generator 71 is higher than the current wind speed. If NO in step S32 (the actual rotation speed of the first generator 71 is equal to or lower than the current wind speed), the process returns to step S31. If YES in step S32 (the actual rotation speed of the first generator 71 is higher than the current wind speed), the process proceeds to step S33.

In step S33, the second power generation control unit 74 controls the second generators 72 to reduce the rotation speed of the rotators 20A to 20D.

The flow of the third example of control of the second generators 72 is thus ended.

Rotor sail wind turbines do not have the concept of tailwind. Wind coming from the front is equivalent to a crosswind for rotor ships, and the relative wind generated by rotation is equivalent to a headwind for rotor ships. Thus, the wind direction is at 90 degrees when the revolution is stopped, at 120 degrees or other obtuse angles when the rotation occurs, and becomes approximate to 180 degrees when the rotation speed increases. At this time, there is a difference as to whether the wind turbine is revolving naturally or revolving at a constant speed. When the revolution speed is fixed, the relative wind direction θ is determined by the wind speed and the revolution speed, and the optimum lift coefficient is determined by Formula (3). When the wind turbine is revolving naturally, the optimum lift coefficient can be determined by Formula (5). If the lift coefficient generated by the rotor sail at the naturally resulting rotation speed is smaller than the optimum lift coefficient determined above, the rotor sail is allowed to rotate naturally. In some cases, a rotation motor may be driven to increase the rotation speed. If the lift coefficient generated by the naturally resulting rotation is greater than the optimum lift coefficient, the lift coefficient is adjusted to the optimum value by applying a brake to the rotation motor to reduce the rotation frequency. This increases the revolution torque and/or revolution speed and increases power generation efficiency.

By way of a fourth example of control of the second generators 72, the second power generation control unit 74 controls the second generators 72 to vary the rotation speed of the rotators 20A to 20D located to the left or right of the revolution position.

For example, the second power generation control unit 74 controls the second generators 72 to reduce the rotation speed of the rotators 20A to 20D located on the left side of the revolution position as viewed from the upwind direction and to increase the rotation speed of the rotators 20A to 20D located on the right side.

<Advantageous Effects>

As described above, the wind power generation device 1 according to the embodiment includes a rotor shaft 70 rotatable around a first rotation axis RC1, a first generator 71 for converting rotational energy of the rotor shaft 70 into electric power, rotators 20A to 20D connected to the rotor shaft 70 and configured to rotate around a second rotation axis RC2 which is different from the first rotation axis RC1, vanes 10A to 10H fixed to the rotators 20A to 20D, and second generators 72 for converting rotational energy of the rotators 20A to 20D into electric power.

According to this configuration, power can be generated not only by the rotation of the rotor shaft 70 (rotation around the first rotation axis RC1) but also by the rotation of the vanes 10A to 10H themselves (rotation around the second rotation axis RC2), thus increasing the degree of freedom of power generation control.

The wind power generation device 1 according to the embodiment further includes a tower 80 and a nacelle 81 supported on the tower 80 so as to be able to turn. The first generator 71 is contained in the nacelle 81.

According to this configuration, the degree of freedom of power generation control can be increased in horizontal axis wind turbines.

The wind power generation device 1 according to the embodiment further includes a first power generation control unit 73 for controlling the first generator 71 and a second power generation control unit 74 for controlling the second generators 72.

According to this configuration, it is possible to adjust the amount of power generated by the rotation of the rotor shaft 70, as well as the amount of power generated by the rotation of the vanes 10A to 10H themselves.

The wind power generation device 1 according to the embodiment further includes a rotation speed obtaining unit 75 for sensing the actual rotation speed of the rotor shaft 70 or the first generator 71, and a wind condition obtaining unit 7 for obtaining wind condition information including the current wind speed. The first power generation control unit 73 controls the first generator 71 based on the results of the comparison between the actual rotation speed and the rated rotation speed. The second power generation control unit 74 controls the second generators 72 based on the wind condition information.

According to this configuration, the amount of power generated by the wind power generation device 1 can be adjusted by controlling the amount of generated power based on the results of the comparison between the actual rotation speed and the rated rotation speed, and by controlling the amount of generated power based on the wind condition information.

In the wind power generation device 1 according to the embodiment, the second power generation control unit 74 controls the second generators 72 to reduce the rotation speed of the rotators 20A to 20D when the current wind speed is equal to or above a threshold value.

According to this configuration, the lift can be reduced by reducing the rotation speed of the vanes 10A to 10H themselves, so that the Magnus effect is less likely to occur during strong winds, and the vanes 10A to 10H are less likely to revolve, thus reducing the force received by the vanes 10A to 10H.

The wind power generation device 1 according to the embodiment further includes a position sensing unit 76 for sensing the distal end positions of the vanes 10A to 10H. The second power generation control unit 74 controls the second generators 72 to reduce the rotation speed of the rotators 20A to 20D when the sensed distal end positions of the vanes 10A to 10H are equal to or above a height threshold.

According to this configuration, by reducing the rotation speed of the rotators 20A to 20D in which the distal end positions of the vanes 10A to 10H are equal to or above a height threshold, the rotation speed of the rotators 20A to 20D that are below the height threshold is relatively increased. This makes it possible to equalize the received forces in the height direction.

The wind power generation device 1 according to the embodiment includes a wind condition obtaining unit 7 for obtaining wind condition information including the current wind speed. The second power generation control unit 74 controls the second generators 72 to reduce the rotation speed of the rotators 20A to 20D when the actual rotation speed of the first generator 71 is higher than the current wind speed.

According to this configuration, the drag (the force preventing the rotation) is greater when the rotation speed of the revolution is high, so the induced drag can be reduced by braking the rotation.

In the wind power generation device 1 according to the embodiment, the second power generation control unit 74 controls the second generators 72 to vary the rotation speed of the rotators 20A to 20D located to the left or right of the revolution position.

According to this configuration, the balance of the forces received by the vanes 10A to 10H in the downwind direction can be adjusted to yaw the vanes 10A to 10H. For example, when the rotation speed of the rotators 20A to 20D located on the left side of the revolution position as viewed from the upwind direction is reduced, and the rotation speed of the rotators 20A to 20D located on the right side is increased, those on the right side will be pressed backward strongly due to the Magnus effect relative to the revolution speed, thus yawing the vanes 10A to 10H rightward.

Some conventional Magnus wind turbines have cylinders serving as blades. However, such conventional Magnus wind turbines require energy to rotate the cylinders on their own axes and rely on some of the energy generated by revolution.

In contrast, in the wind power generation device 1 according to the embodiment, the blades 82A to 82E rotate on their own axes by the force of the wind, so power can be generated by both the revolution and the rotation. According to the embodiment, the synergic effect of the propulsive force (revolution of the blades 82A to 82E) and the rotational force (rotation of the blades 82A to 82E on their own axes) can realize the wind power generation device 1 having a high efficiency.

<Second Embodiment>

The following describes a rotor sail according to a second embodiment. In the following description, the parts having the same functions as in the first embodiment will have the same names and reference numerals, and their functions will not be specifically described.

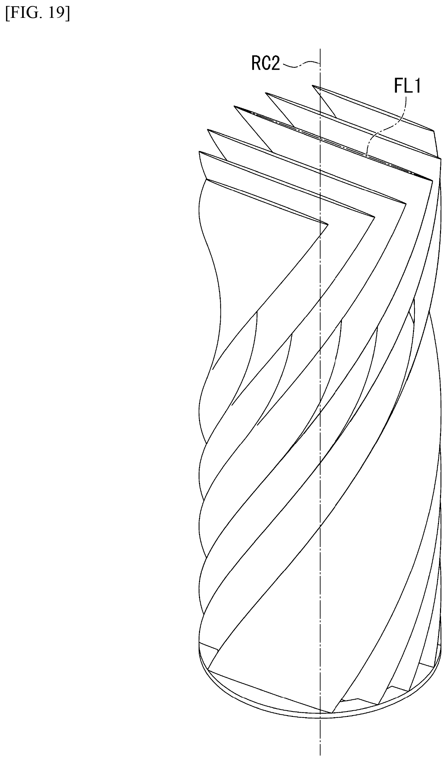

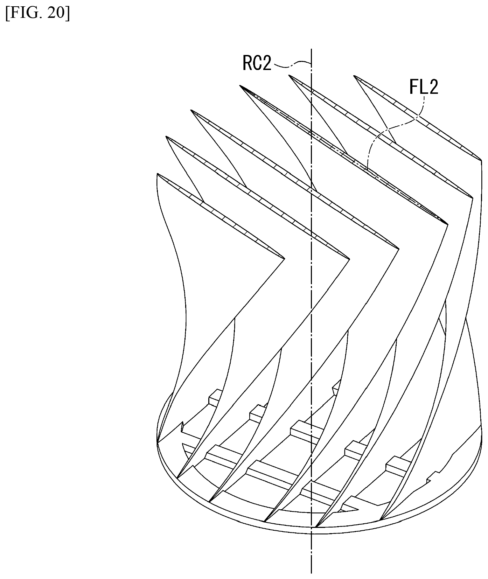

Fig. 19 is a perspective view showing a first position of a plurality of vanes in a wind propulsion device 401 according to the second embodiment, viewed from one side. Fig. 20 is a perspective view showing a second position of the plurality of vanes in the wind propulsion device 401 according to the second embodiment, viewed from one side. Figs. 19 and 20 do not show the distal end plate and other members constituting the assembly.

Referring to Figs. 19 and 20 together, in the wind propulsion device 401 according to the second embodiment, each of the plurality of vanes has a twisted shape so that a first imaginary straight line FL1 (the drawing shows the first imaginary straight line FL1 for one vane), which connects both ends of the vane at a first position on the second rotation axis RC2, and a second imaginary straight line FL2 (the drawing shows the second imaginary straight line FL2 for one vane), which connects both ends of the vane at a second position on the second rotation axis RC2 different from the first position, intersect each other as viewed from the direction along the second rotation axis RC2 (an example of a predetermined direction).

In the illustrated example, the six vanes are twisted so that the first imaginary straight line FL1 at the first position on the second rotation axis RC2 and the second imaginary straight line FL2 at the second position on the second rotation axis RC2 intersect as viewed from the direction along the second rotation axis RC2. In other words, each of the six vanes has a twisted shape such that cross-sections thereof orthogonal to the direction along the second rotation axis RC2 are the same at any position on the second rotation axis RC2. It should be noted that the manner of twisting (such as the shape) of the plurality of vanes is not limited to the above and may be modified in accordance with the design specifications.

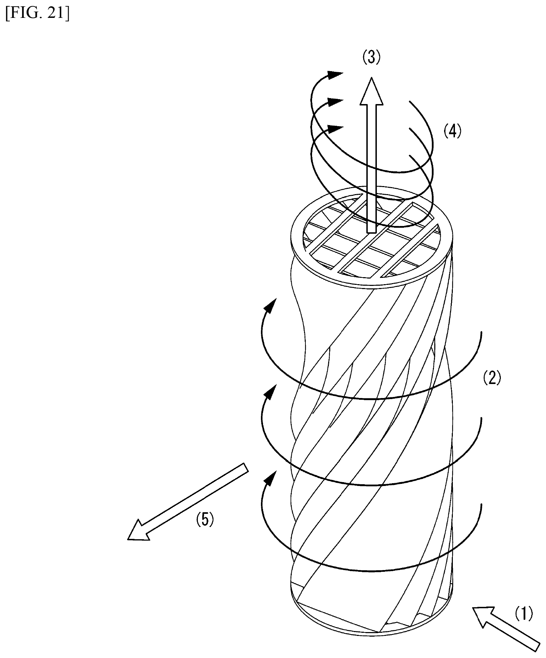

Fig. 21 is an explanatory diagram of the effect of the wind propulsion device 401 according to the second embodiment.

Referring also to Fig. 21, according to the embodiment, a plurality of parallel vanes are twisted and extended in the height direction to create an updraft, maintain air circulation beyond the vane edges, and reduce induced drag. When rotated in the opposite direction, the airflow is downward, but the same effect can be produced.

In the embodiment, the propulsive force can be generated through the following steps (1) to (5).

(1) Natural wind blows in the direction of the arrows.
(2) Circulating flow is generated by the rotation of the vanes caused by the natural wind.
(3) The torsional effect of the vanes generates an updraft.
(4) Circulating airflow caused by the vanes is carried upward by the updraft.
(5) The action of the natural wind and the circulating flow generates a propulsive force (Magnus force) in the direction orthogonal to the wind in step (1).

In the wind propulsion device 401 according to the embodiment, each of the plurality of vanes has a twisted shape such that the first imaginary straight line FL1, which connects both ends of the vane at a first position on the second rotation axis RC2, and the second imaginary straight line FL2, which connects both ends of the vane at a second position on the second rotation axis RC2 different from the first position, intersect with each other as viewed in the direction along the second rotation axis RC2.

According to this configuration, the plurality of vanes have a shape twisted along the direction along the second rotation axis RC2, thus generating airflow along the direction along the second rotation axis RC2. Thus, induced drag can be reduced and, in turn, propulsion efficiency can be improved.

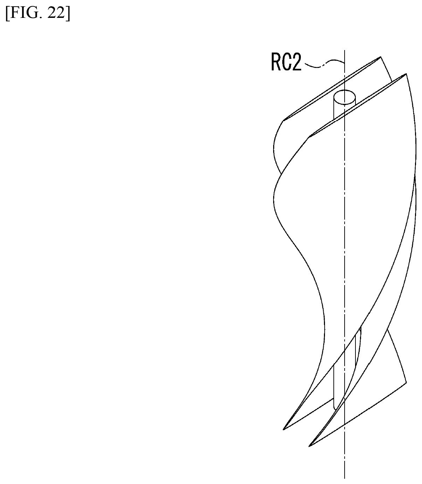

Fig. 22 is a diagram showing a modification example of a twisted shape of a plurality of vanes.

Referring also to Fig. 22, the two vanes opposed to each other via a pillar on the second rotation axis RC2 may be twisted so that the first imaginary straight line at the first position on the second rotation axis RC2 and the second imaginary straight line at the second position on the second rotation axis RC2 intersect as viewed from the direction along the second rotation axis RC2. For example, if assemblies are provided in multiple stages, the vanes may be twisted by 60 degrees per stage of the assemblies. It should be noted that the manner of twisting (such as the angle) of the vanes in the assemblies is not limited to the above and may be modified in accordance with the design specifications.

According to this modification example, vibration can be canceled by twisting the vanes. For example, if assemblies are provided in multiple stages, the vanes may be twisted by a predetermined angle per stage of the assemblies, resulting in smooth characteristics. Thus, the propulsive force derived from the wind can be less dependent on the rotational angle and less affected by the aspect ratio (e.g., induced drag).

The twisting may be reversed at an intermediate position. Alternatively, units twisted in opposite directions may be stacked together. This also cancels moment vibrations.

<Third Embodiment>

The following describes a rotor sail according to a third embodiment. In the following description, the parts having the same functions as in the first embodiment will have the same names and reference numerals, and their functions will not be specifically described.

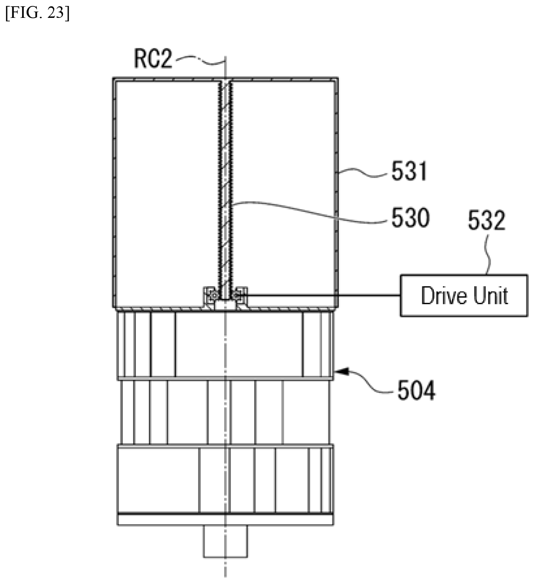

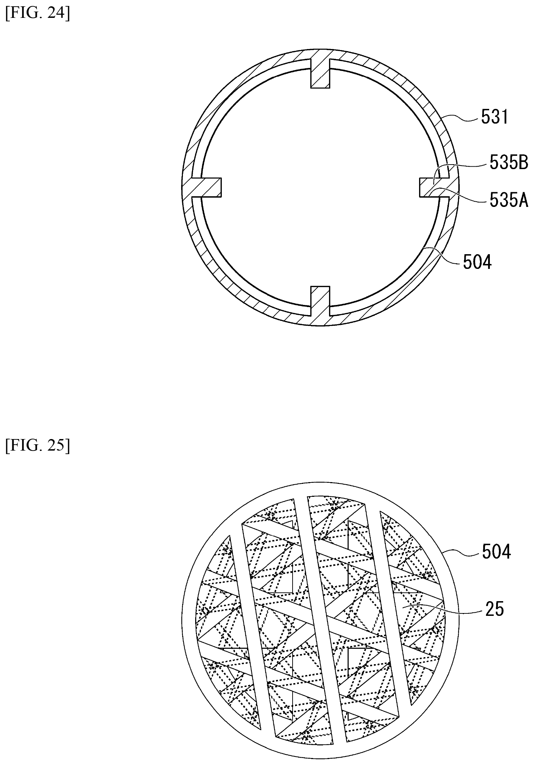

Fig. 23 is a side view of a blade according to the third embodiment, including a longitudinal section thereof. Fig. 24 is a diagram showing the blade according to the third embodiment, including a cross section thereof. Fig. 25 is a diagram showing the blade according to the third embodiment as viewed from one side of the second rotation axis.

Referring to Figs. 23 to 25 together, the blade according to the third embodiment further includes a shaft 530 provided on top of the assembly 504 extending along the second rotation axis RC2, a cover 531 connected to the shaft 530 so as to be movable up and down, and a drive unit 532 (e.g., a motor) that moves the cover 531 to a non-operating position for covering the assembly 504 and an operating position for not covering the assembly 504. The cover 531 rotates integrally with the assembly 504.

For example, the cover 531 may be connected to the assembly 504 via slide structures 535A, 535B so as to be movable up and down. In the illustrated example, the concave-convex structure as the slide structures 535A, 535B includes four concave portions 535A, formed at equal intervals in the outer circumference of the cylinder portion of the assembly 504, and convex portions 535B, formed at equal intervals on the inner circumference of the cover 531 and fitted into the concave portions 535A. The slide structure is not limited to the concave-convex structure described above but may be modified in accordance with the design specifications.

For example, the connecting structure between the shaft 530 and the drive unit 532 may include a mechanism such as a rack and pinion or ball screw. For example, when the shaft 530 has an external thread, the drive unit 532 may have an internal thread meshing with the external thread at the connection site with the shaft 530. Note that the connecting structure between the shaft 530 and the drive unit 532 is not limited to the above and can be modified in accordance with the design specifications.

Although not shown in the figure, a reinforcement member for reinforcing the vanes may be provided, for example, in the region located between the vanes (shown in dashed lines in Fig. 25) and overlapping with the support plate 25 on the hub 83 when the blades are viewed from one side of the second rotation axis RC2. For example, the reinforcement member may include a pillar extending along the second rotation axis RC2. For example, the reinforcement member can be configured in any other manners as required by design specifications.

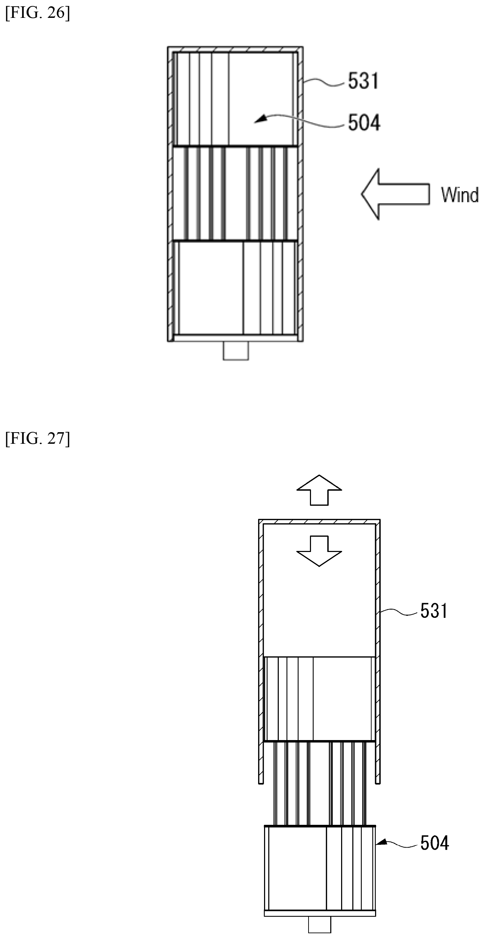

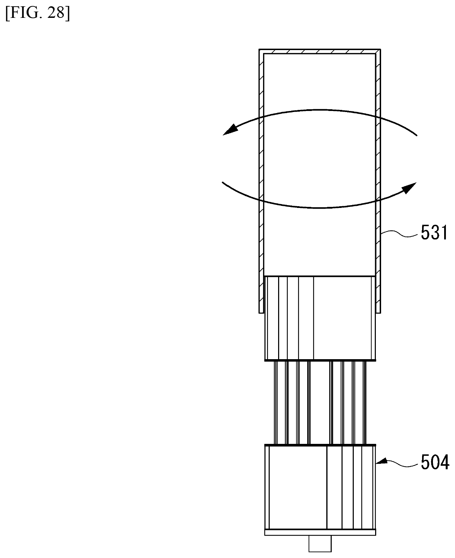

Fig. 26 is a diagram showing an example of the effect of the blade according to the third embodiment. Fig. 27 is a diagram showing an example of operation of the blade according to the third embodiment. Fig. 28 is a diagram showing another example of operation of the blade according to the third embodiment.

Referring to Figs. 26 to 28 together, in this embodiment, when the assembly 504 is not in operation, the cover 531 reduces the force received in strong winds, and when in operation, the rotation of the cover 531 provides the Magnus effect to obtain propulsive force.

As shown in Fig. 26, for example, when the assembly 504 is not in operation, the cover 531 is moved down to cover the entire assembly 504. This significantly reduces wind resistance because the assembly 504 no longer receives wind.

As shown in Fig. 27, for example, the cover 531 can be moved up and down in accordance with whether or not the assembly 504 is in operation. For example, the upward and downward movement of the cover 531 may be performed by controlling the drive unit 532 (e.g., controlling the rotation direction of the motor).

As shown in Fig. 28, for example, when the assembly 504 is in operation, the cover 531 is rotated in accordance with the rotation of the assembly 504. Thus, in addition to the assembly 504, the cover 531 can produce the Magnus effect to amplify the propulsive force.

The blade according to this embodiment further includes a shaft 530 provided on top of the assembly 504 extending along the second rotation axis RC2, a cover 531 connected to the shaft 530 so as to be movable up and down, and a drive unit 532 that moves the cover 531 to a non-operating position for covering the assembly 504 and an operating position for not covering the assembly 504.

According to this configuration, the cover 531 for switching the assembly 504 between the operating state and the non-operating state can produce the Magnus effect during operation, thus improving the propulsion efficiency.

In the blade according to this embodiment, the cover 531 rotates integrally with the assembly 504.

According to this configuration, the cover 531, which rotates integrally with the assembly 504, can also generate Magnus force.

<Modification Example of Wind Power Generation Device>

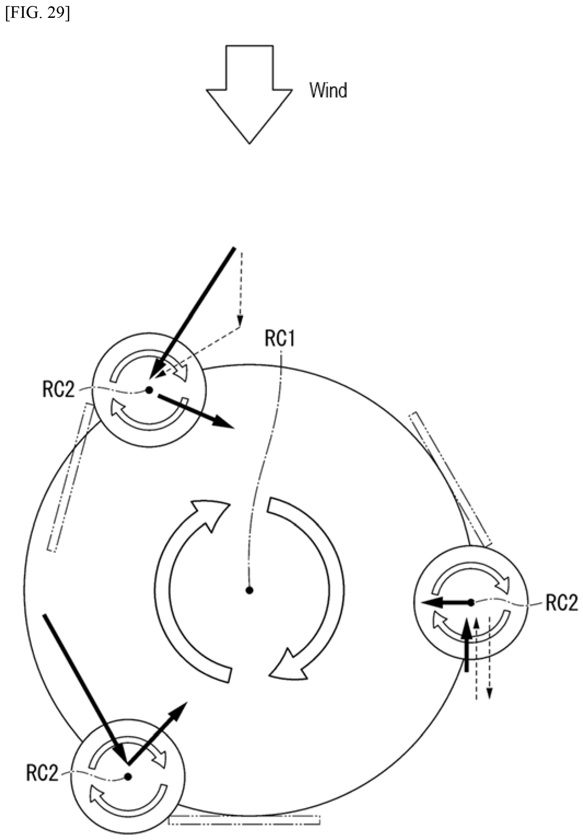

Fig. 29 is a diagram showing a modification example of the wind power generation device.

Referring also to Fig. 29, the wind power generation device may function as a vertical axis wind turbine with the first rotation axis RC1 being a vertical axis extending in the vertical direction. In this case, the second rotation axis RC2 corresponds to the axes along the longitudinal directions of vertical vanes.

When the vertical axis wind turbine has rotor sails, there are advantages or disadvantages in the effect of natural wind depending on whether the rotor sail moves frontward or backward, but the upwind side is more affected by natural wind than the downwind side, allowing the rotor sails to rotate.

For example, when a rotor sail moves from the upwind side to the downwind side, the wind acts advantageously. In other words, the rotor sail receives a strong wind.

On the other hand, when the rotor sail moves from the downwind side to the upwind side, the wind acts disadvantageously. However, the wind is weakened.

A flat plate (represented by the two-dot chain line in the figure) may be attached to the rear of the rotor sail. This allows the rotor sail to generate a constant revolving force even if it is rotating in a constant direction.

<Modification Examples>

The technical scope of the present invention is not limited to the embodiments described above but is susceptible of various modifications within the purport of the present invention.

The functions of the control unit according to the embodiments described above may be implemented in a program stored on a computer-readable storage medium, and the program stored on the storage medium may be loaded onto a computer system that then executes the program for processing.

The "computer system" mentioned above may include an operating system (OS) or hardware such as peripheral devices.

The "computer-readable storage medium" mentioned above refers to a storage device such as a portable medium like a flexible disc, a magneto-optical disc, a ROM (Read Only Memory), a flash memory or other writable non-volatile memory, and a DVD (Digital Versatile Disc), and a hard disk built-in to the computer system.

Further, the "computer-readable storage medium" includes storage media that retain the program for some period of time, like a volatile memory (for example, DRAM (Dynamic Random Access Memory)) in an information processing device receiving the program through a network such as the Internet or a communication line such as a telephone line, or in a computer system that operates as a client.

The program mentioned above may be transmitted from a computer system that includes a storage device or the like storing the program to another computer system through a transmission medium or by a transmission wave in a transmission medium. The "transmission medium" for transmitting the program refers to a medium that operates to transmit information, like a network (communication network) such as the Internet or a communication line (communication wire) such as the telephone line.

Only a part of the functions described above may be implemented in the above program. Further, the functions described above may be implemented by a combination of the above program and other programs previously stored on the computer system. That is, the above program may be what is called a difference file (a difference program).

The elements of the embodiments described above may be replaced with known elements within the purport of the present invention. Further, the modifications described above may be combined.

In the embodiments disclosed herein, a member formed of multiple components may be integrated into a single component, or conversely, a member formed of a single component may be divided into multiple components. Irrespective of whether or not the components are integrated, they are acceptable as long as they are configured to attain the object of the invention.

According to the foregoing embodiments disclosed herein, a plurality of functions may be distributively provided. Some or all of these functions may be integrally provided. Conversely, a different plurality of functions may be integrally provided. Some or all of these functions can be distributively provided. Irrespective of whether the functions are integrally or distributively provided, they are acceptable as long as they are configured to attain the object of the invention.

REFERENCE SIGNS LIST

1...wind power generation device, 7...wind condition obtaining unit, 10A to 10H...vane, 20A, 20B...rotator support, 70...rotor shaft, 71...first generator, 72...second generator, 73...first power generation control unit, 74...second power generation control unit, 75...rotation speed obtaining unit, 76...position sensing unit, 80...tower, 81...nacelle, RC1...first rotation axis, RC2...second rotation axis

**Claims**

1. A wind power generation device, comprising:

   a rotor shaft rotatable around a first rotation axis;
   a first generator for converting rotational energy of the rotor shaft into electric power;
   a rotator connected to the rotor shaft and rotatable around a second rotation axis that is different from the first rotation axis;
   a vane fixed to the rotator; and
   a second generator for converting rotational energy of the rotator into electric power.

**2.** The wind power generation device of claim 1, further comprising:

a tower; and
a nacelle supported on the tower so as to be able to turn,
wherein the first generator is contained in the nacelle.

**3.** The wind power generation device of claim 1 or 2, further comprising:

a first power generation control unit for controlling the first generator; and
a second power generation control unit for controlling the second generator.

**4.** The wind power generation device of claim 3, further comprising:

a rotation speed obtaining unit for sensing an actual rotation speed of the rotor shaft or the first generator; and
a wind condition obtaining unit for obtaining wind condition information including current wind speed,
wherein the first power generation control unit controls the first generator based on a result of comparison between the actual rotation speed and a rated rotation speed, and
wherein the second power generation control unit controls the second generator based on the wind condition information.

**5.** The wind power generation device of claim 4, wherein the second power generation control unit controls the second generator to reduce a rotation speed of the rotator when the current wind speed is equal to or above a threshold value.

**6.** The wind power generation device of claim 3, further comprising:

a position sensing unit for sensing a distal end position of the vane,
wherein the second power generation control unit controls the second generator to reduce a rotation speed of the rotator when the sensed distal end position of the vane is equal to or above a height threshold.

**7.** The wind power generation device of claim 3, further comprising:

a wind condition obtaining unit for obtaining wind condition information including current wind speed,
wherein the second power generation control unit controls the second generator to reduce a rotation speed of the rotator when an actual rotation speed of the first generator is higher than the current wind speed.

**8.** The wind power generation device of claim 3, wherein the second power generation control unit controls the second generator to vary a rotation speed of the rotator located to left or right of a revolution position.

[FIG. 1]

[FIG. 2]

1

Nacelle 81

Hub 83

Wind Condition Obtaining Unit 7

Rotor Shaft 70

First Generator 71

Rotation Speed Obtaining Unit 75

First Power Generation Control Unit 73

Second Generator 72

Second Power Generation Control Unit 74

Rotators 20A~20D

Vanes 10A~10H

Position Sensing Unit 76

82A~82E

Tower 80

EP 4 779 147 A1

[FIG. 3]

_1_

[FIG. 4]

[FIG. 5]

[FIG. 6]

[FIG. 7]

[FIG. 8]

[FIG. 9]

[FIG. 10]

[FIG. 11]

[FIG. 12]

[FIG. 13]

[FIG. 14]

[FIG. 15]

[FIG. 16]

START

S11
Obtain Current Wind Speed

S12
NO — Current Wind Speed ≥ Threashold?

YES

S13
Reduce Rotation Speed of Rotators

END

[FIG. 17]

START

S21
Sense Distal End Positions of Vanes

S22
NO — Distal End Positions of Vanes ≥ Height Threashold?

YES

S23
Reduce Rotation Speed of Rotators

END

[FIG. 18]

```
         ┌─────────┐
         │  START  │
         └────┬────┘
              │
    ┌─────────┤
    │         ▼                        ╭─S31
    │  ┌──────────────────────────┐
    │  │  Obtain Current Wind Speed │
    │  └──────────┬───────────────┘
    │             │
    │             ▼                    ╭─S32
    │         ╱─────────╲
    │       ╱  Actual Rotation  ╲
 NO │      ╱   Speed of First    ╲
    │◄─────   Generator  >        ────
    │      ╲  Current Wind Speed?╱
    │       ╲─────────╱
    │             │ YES
    │             ▼                    ╭─S33
    │  ┌──────────────────────────┐
    │  │ Reduce Rotation Speed of  │
    │  │        Rotators           │
    │  └──────────┬───────────────┘
    │             │
    │             ▼
    │         ┌─────────┐
    │         │   END   │
    │         └─────────┘
```

[FIG. 19]

[FIG. 20]

[FIG. 21]

[FIG. 22]

RC2

[FIG. 23]

[FIG. 24]

[FIG. 25]

[FIG. 26]

[FIG. 27]

[FIG. 28]

[FIG. 29]

## INTERNATIONAL SEARCH REPORT

| International application No. |
|---|
| **PCT/JP2024/020475** |

| A. | CLASSIFICATION OF SUBJECT MATTER |
|---|---|

*F03D 1/06*(2006.01)i
FI:  F03D1/06 Z

According to International Patent Classification (IPC) or to both national classification and IPC

| B. | FIELDS SEARCHED |
|---|---|

Minimum documentation searched (classification system followed by classification symbols)

F03D1/06

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

| C. | DOCUMENTS CONSIDERED TO BE RELEVANT |
|---|---|

| Category* | Citation of document, with indication, where appropriate, of the relevant passages | Relevant to claim No. |
|---|---|---|
| X | JP 2017-089636 A (IHI CORP.) 25 May 2017 (2017-05-25) | 1 |
|  | paragraphs [0057]-[0074], fig. 9-12 | |
| Y |  | 2-5 |
| A |  | 6-8 |
| Y | JP 2009-068379 A (MITSUBISHI HEAVY INDUSTRIES, LTD.) 02 April 2009 (2009-04-02) | 2-5 |
|  | paragraphs [0018], [0037]-[0047], fig. 1, 4 | |
| A | JP 55-040257 A (NISHITAKE, Hiroshi) 21 March 1980 (1980-03-21) | 1-8 |
|  | entire text, all drawings | |
| A | US 4366386 A (HANSON, Thomas F.) 28 December 1982 (1982-12-28) | 1-8 |
|  | entire text, all drawings | |

☐ Further documents are listed in the continuation of Box C.  ☑ See patent family annex.

| * | Special categories of cited documents: |
|---|---|
| "A" | document defining the general state of the art which is not considered to be of particular relevance |
| "D" | document cited by the applicant in the international application |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
|---|---|
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| **13 August 2024** | **27 August 2024** |

| Name and mailing address of the ISA/JP | Authorized officer |
|---|---|
| **Japan Patent Office (ISA/JP)** **3-4-3 Kasumigaseki, Chiyoda-ku, Tokyo 100-8915** **Japan** | |
|  | Telephone No. |

Form PCT/ISA/210 (second sheet) (July 2022)

## INTERNATIONAL SEARCH REPORT
### Information on patent family members

| International application No. |
|---|
| **PCT/JP2024/020475** |

| Patent document cited in search report | | | Publication date (day/month/year) | Patent family member(s) | | | Publication date (day/month/year) |
|---|---|---|---|---|---|---|---|
| JP | 2017-089636 | A | 25 May 2017 | (Family: none) | | | |
| JP | 2009-068379 | A | 02 April 2009 | TW | 201018078 | A | |
| JP | 55-040257 | A | 21 March 1980 | (Family: none) | | | |
| US | 4366386 | A | 28 December 1982 | (Family: none) | | | |

Form PCT/ISA/210 (patent family annex) (July 2022)

**REFERENCES CITED IN THE DESCRIPTION**

**Patent documents cited in the description**

- JP 2023147737 A

- JP 2020118076 A